# EUROPEAN PATENT APPLICATION

(11) **EP 4 764 742 A1**
(43) Date of publication of application: **24.06.2026**
(21) Application number: 25221151.1
(22) Date of filing: 05.12.2025
(51) Int. Cl.: G05B 13/02, G05B 13/04

(54) **CONTROL SYSTEM FOR CONTINOUSLY OPTIMISING RESOURCES IN PROCESSES OF A PRODUCTION LINE OF THE MANUFACTURING INDUSTRY**

(30) Priority: 19.12.2024 IT 202400029151
(71) Applicant: Bechained Co., Dover, DE 19904 (US)
(72) Inventor: MELCHIOR, Stefano, 08039 Barcelona (ES); RAFIEIAN, Bardia, 08038 Barcelona (ES); PEYMAN, Mohammad, 08029 Barcelona (ES)
(74) Representative: Faggioni, Marco

(57) **Abstract**

Control system for continuously optimizing the consumption rates of basic raw materials in a production line of the manufacturing industry, by generating a target function, wherein a relationship between the consumption rates of basic raw materials and the status of operating parameters of all the machines of said production line that have a significant consumption rate of said basic raw materials is defined, and by optimizing said target function using a RL algorithm, possibly supplemented with heuristic models.

## Description

### FIELD OF THE INVENTION

The present invention relates to a control system for the continuous optimization of resources in processes of a production line of the manufacturing industry.

In particular, the invention is directed at a control system for optimizing resources in industrial production lines with high energy consumption, such as, in particular, in the manufacturing of steel and paper and in food processing, by means of machine learning and reinforcement learning (RL) techniques. More specifically, optimization concerns one or more of the processes carried out within the production line, with particular attention to those processes that consume a significant amount of resources.

### PRIOR ART

It has long been known that the operation of industrial machines can be optimized by using machine learning programs executed on processors. The operation of such industrial machines is, in fact, optimized through successive attempts, automatically, towards achieving a specific objective-for example, the productivity of the machine or its efficiency with respect to the consumed resources -through continuous interaction between the machine and said machine learning programs. During this iteration, the operating parameters of the machine are automatically varied in small steps, verifying in real time the resulting changes in the performance under observation, until going about conditions of said parameters where the observed performance is optimized to the desired extent and direction.

However, this well-established approach is not as satisfactory when applied to a plurality of machines operating within the same industrial production line, where proper optimization of all the individual machines does not necessarily entail a satisfactory optimization of the entire industrial production line.

It has therefore been thought to apply the same machine learning techniques used on individual machines to several different processes, to optimize an entire industrial production line, but until now, no effective solution has been found to process, in a unified and sufficiently fast manner, the information coming from all the operating machines of said industrial production line. The speed of processing the available data is, in fact, a key factor for the successful application of machine learning programs to an array of machines organized in an industrial production line. The optimization calculations must, in fact, converge to an optimized condition - i.e., a final situation that shows an improved result compared to the initial situation, the baseline - faster than the frequent variations, caused by the different ongoing or accidental processes occurring within the production line.

The technical problem addressed by the present invention is therefore to identify an effective bespoke system for continuously optimizing resources in a production line of the manufacturing industry, by means of machine learning programs.

Within this technical problem, a first object of the invention is to identify the significant parameters for the optimization of resources in a generic production line, which are also suitable for speeding up the machine learning procedure.

A second object of the invention is then to verify that the optimization result, in terms of variation of the control parameters of the individual machines of the production line, is compatible with the technical and production limitations of the specific production line considered, before making said control parameters operational.

A third object of the invention is also to measure and display the result obtained with the optimization, so as to allow a real-time assessment of the differential trend of the optimized production line compared to the same non-optimized production line, as well as the trend over time of the consumption of the resources subject to optimization and of the parameters of the individual processes of the production line that contributed to these improvements.

A fourth object of the invention is finally to monitor the processing times of the optimization system and the use of the available processing resources, at each iteration, to verify the consistency of the processing resources with respect to the complexity of the same processing operation, particularly following the introduction or replacement of machines in the production line.

### SUMMARY OF THE INVENTION

This problem is effectively solved, and these objects are achieved by means of a control system for optimizing resources in a production line of the manufacturing industry, by means of machine learning programs, having the features defined in claim 1. Further preferred features of such a control system are defined in the dependent claims.

### BRIEF DESCRIPTION OF THE DRAWINGS

Further features and advantages of the control system for optimizing resources in processes of the manufacturing industry according to the present invention will become more apparent from the following detailed description of a preferred embodiment thereof, provided purely by way of example and not limitation, and illustrated in the attached drawings, in which:
Fig. 1 is a block diagram illustrating step 1 of connection and authentication to data sources and steps 2-4 of retrieval, storage, and visualization of data from said sources;
Fig. 2 is a block diagram illustrating steps 5-9 of process selection, identification of the operating parameters of the operating machines and their interactions in a production line, which determines the creation of an "environment" (ENV) file. This is referred to as L2 (Layer 2, working at the physical context level of the machines and production processes), because it adapts to the specificity of the working environment of a selected production line;
Fig. 3 is a block diagram illustrating steps 10-14 of definition and classification of the variables of the operating devices and their alarm limits, with generation of a "customer policy" file and processing by means of a machine learning program of the target function that expresses the energy consumption of the production line. Finally, the execution of the optimization model is invoked;

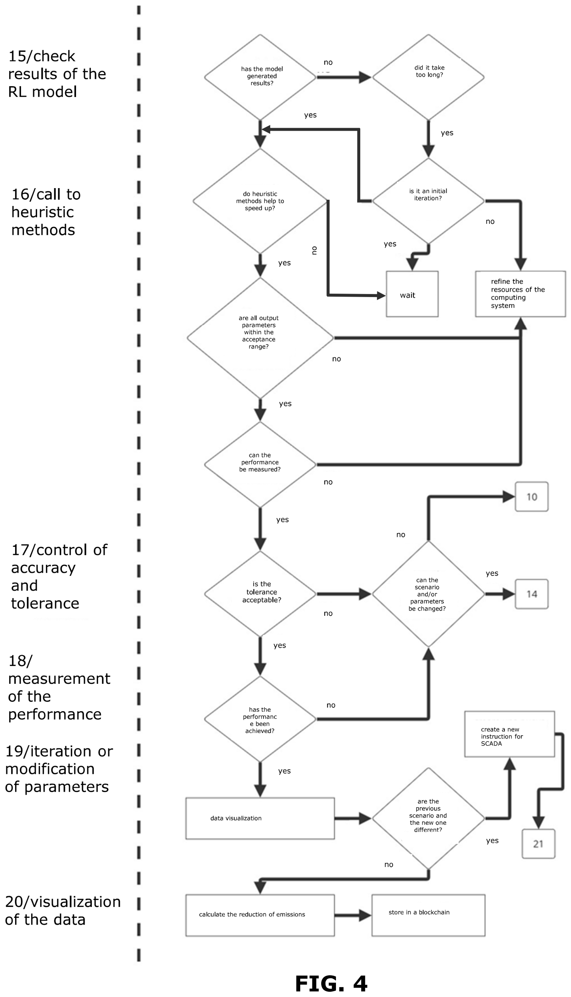

Fig. 4 is a block diagram illustrating steps 15-20 of monitoring the times and results of processing with a continuous machine learning program, as well as measuring performance and their visualization;

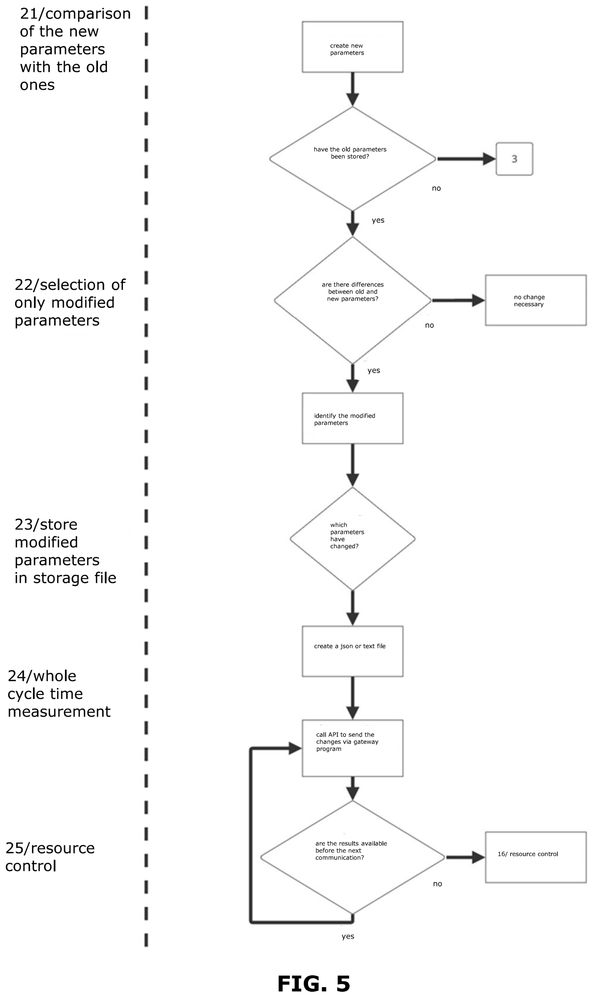

Fig. 5 is a block diagram illustrating steps 21-25 of verification, selection, and archiving of the modified control parameters as well as verification of the consistency of the processing resources; and

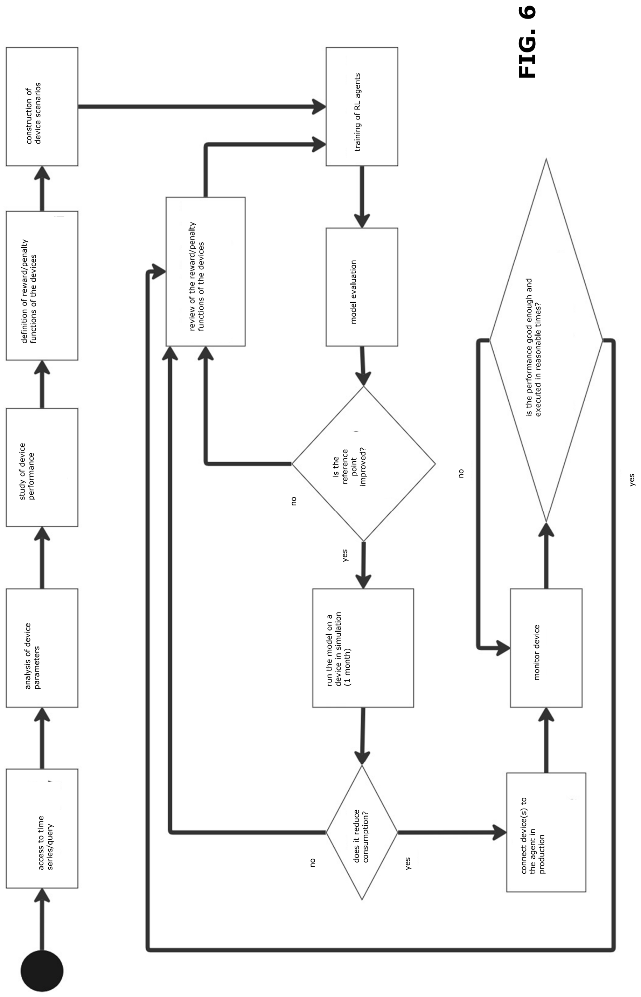

Fig. 6 is a block diagram explaining how the control system for optimizing resources updates and adapts in subsequent iterations, generating a virtuous cycle of continuous adaptation to the working environment.

### DETAILED DESCRIPTION OF THE PREFERRED EMBODIMENT

According to the present invention, to solve the above-mentioned technical problem, the inventors have developed the architecture of a control system that allows for effective and reliable optimization of resources in a complex production line of the manufacturing industry, by means of machine learning techniques. The control system of the present invention is not specifically directed to optimizing a particular production line of the manufacturing industry, although it finds preferred application in the case of particularly complex industrial production lines, such as, for example, food, steel, and paper production lines.

A first important feature of the control system of the invention consists in the selection of the parameters of the various industrial processes of the production line to be kept under control, i.e., the parameters on which the overall optimization of the industrial production line is measured. In order to achieve a continuous optimization system, and thus a high frequency of intervention on the control parameters of the operating machines, the inventors have deemed it necessary to monitor only the process parameters relating to the consumption of basic raw materials, where this definition refers to raw materials that do not become part of the final product but are nevertheless used in its production, such as typically various forms of energy (including heat and steam), air and water, and therefore, for example, thermal processes, water, liquid, and/or compressed air management systems, and air extraction or treatment processes. The consumption of these basic raw materials is, however, measured at the individual machines or devices that use them-either directly, for example by means of intelligent digital meters, or indirectly, for example by means of the variation of electrical parameters that contribute to increasing the temperature of an induction furnace, in cases where direct measurement cannot be reliably performed-so as to allow the reading of consumption data and any remote processing thereof. The various operations performed by the control system of the invention, as well as the individual steps carried out within each operation, will be briefly analysed and discussed below with reference to the block diagram illustrated in the drawings, in which abbreviations widely used in the field are employed, an explanatory list of which is provided below.

### Legend of abbreviations used in the description and drawings

ERP: Enterprise Resource Planning - Production planning system
GATEWAY SOFTWARE: Virtual Machine (VM), virtualization of a physical server, which allows the installation and operation of applications, in this case an MQTT client
MES: Manufacturing Execution System - System for executing an industrial process
MQTT: Message Queuing Telemetry Transport - Messaging and client/server communication queue management software
OPC: OLE for Process Control - Communication standard in the field of industrial process control and supervision, providing a common communication interface that allows data sharing and interaction with physical devices. It is based on a client-server architecture
OPC UA: (OLE for Process Control Unified Architecture) - Standards that facilitate data exchange between programmable logic controllers (PLCs), human-machine interfaces (HMIs), servers, clients, and other machinery for the purpose of interconnectivity and information flow
SCADA: Supervisory Control And Data Acquisition - Software application for monitoring and supervising a network of controllers and associated physical processes in an industrial environment
SM: Smart Meters - Intelligent digital meters
VPN: Virtual Private Network - Element that channels encrypted information between two points of an Internet communication between two parties

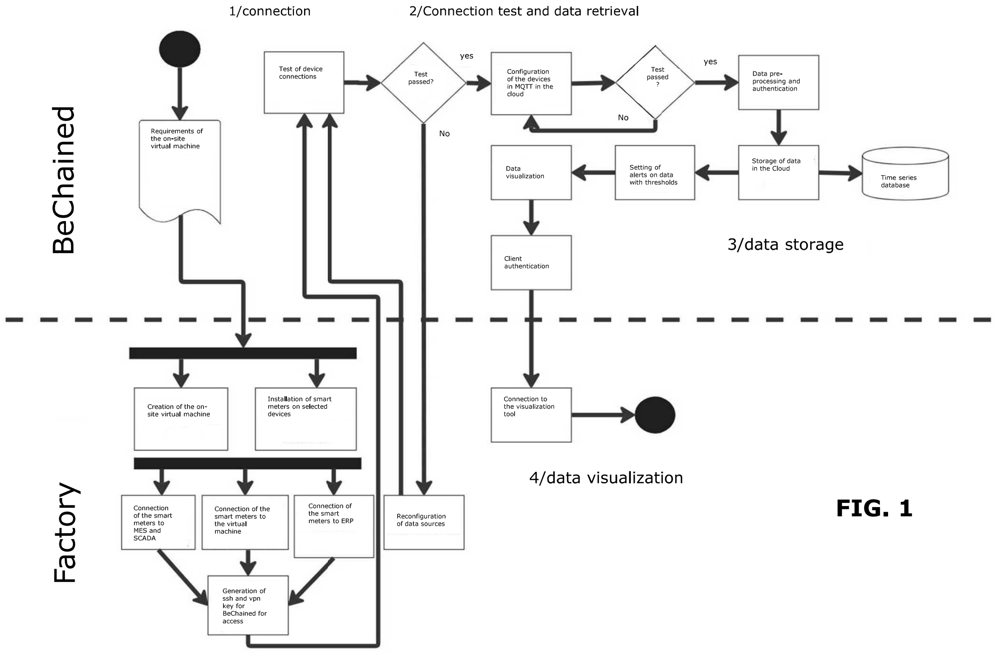

### First function - Data management (fig. 1)

### Step 1: Connection to data sources

The control system connects to the Gateway Software (Virtual Machine), installed in the industrial facility, which acts as a data collector from three distinct sources:
- intelligent digital meters (SM) that measure and store the consumption of the afore-mentioned basic raw materials, such as electricity, natural gas, compressed air, or water, by the individual machines of the industrial production line that have significant consumption rates;
- the industrial process execution system (MES) through protocols such as SCADA or OPC;
- the production planning system (ERP).

### Step 2: Connections tests and data retrieval

The control system verifies that there is a correct connection between the Gateway software at the customer's installation and the remote server, and that said connection is secure. For this reason, ad hoc cryptographic keys are generated, and a VPN (Virtual Private Network) is implemented to ensure a secure encrypted connection between the cloud-based optimization system and the industrial facility environment. The system then verifies that the connection with the data sources is active, and analyses whether the client - for example an MQTT system, which collects information and sends data packets to the remote server - is operating correctly, whether its queue is empty or full, and whether it is actually sending information.

Authentication checks are then performed at both endpoints of the communication system between the client and the remote server. It is always also verified that the authentication on both sides is a two-factor authentication with tokens and that the configuration is correct for collecting information from the user side and for proceeding with storage in the remote server databases.

### Step 3: Data storage

A function of the control system converts messages coming from the information sources of the monitored production facility, or from the surrounding environment, into instructions that are stored in three different databases: a first active or hot database with the last hours of acquisitions (for example, the last 6 hours), where the consumption rates of basic raw materials are displayed; a second database in which both real-time and historical information is stored, intended for data processing by the optimization programs; finally, a third database for storing data for backup purposes.

### Step 4: Data visualization

The control system includes a dashboard to which users can access in view-only mode to read the information received from the process, as well as the parameters calculated by the control system. On the same dashboard, the differences and improvements induced by the changes activated by the control system and the process parameters that have been modified to produce a constant improvement in resource use are also highlighted.

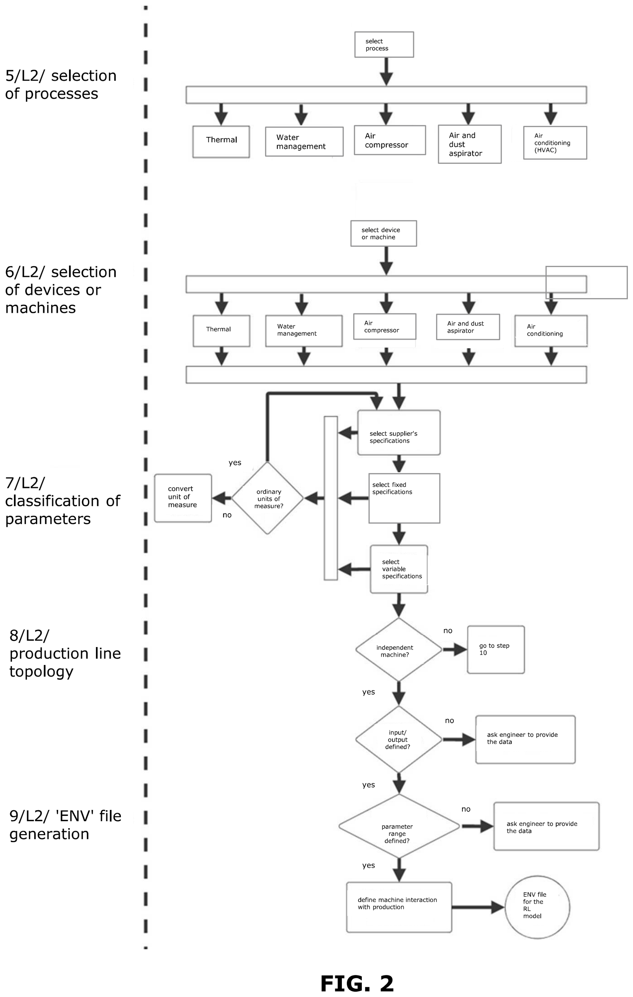

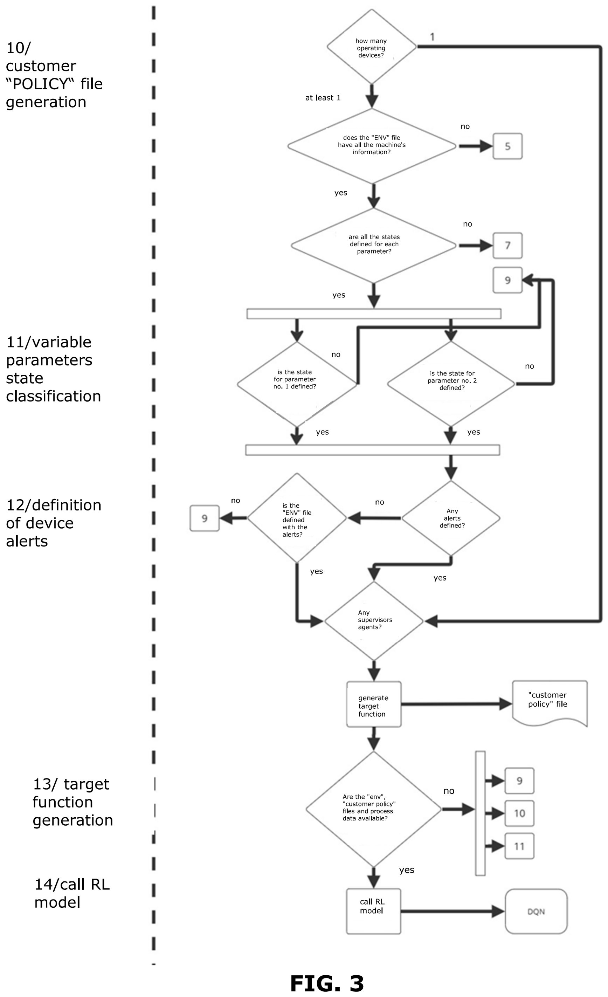

### Second function - Generation of a target function (fig. 2 and fig. 3)

### Step 5: Selection of industrial processes

The process line is customized and configured in the control system of the invention, by identifying the individual manufacturing processes involved and, in each of these, the type of devices or machines that must be monitored by the control system.

### Step 6: Selection of devices or machines

For each manufacturing process, the specifications and identifying data and/or other information from the supplier characterizing the physical machines involved are then identified and stored. The basic raw materials consumption rates of these machines are measured, and the control parameters of their operation are monitored.

### Step 7: Classification of machine parameters

Machine-related data are classified among fixed and variable. Fixed data correspond, for example, to the geometric specifications of the machines or to control parameters that are un-modifiable or not subject to variation after initial setting. Variable data include instead input and output variables of the machine as well as the adjustable control parameters that determine the operating mode of the machine in the process under consideration. According to another feature of the invention, the control actions of the control system of the invention are carried out exclusively on said adjustable control parameters, while continuously monitoring that the constraints of the individual processes of the production line (for example, the pressure and flow rate of a liquid leaving a pump) remain within a predefined range.

In this step of defining the control parameters of the machines, the admissible value ranges for the variable data are also defined, which ranges the user has previously validated as suitable for the correct operation of the production line. As a matter of fact, the output result of the production line must not change, because of the intervention of the control system of the invention, either with respect to expectations in terms of quality and quantity or with respect to the quantitative forecasts of production planning.

Verification of compliance with said admissible value ranges for the variable data is carried out each time new information is received from the process, or a new parameter is processed by the control system.

### Step 8: Topology of the production line

As the final result of steps 6 and 7 of customization of the control system, a work environment 'ENV' file is created, in which the configuration of the production line is contextualized under the form of a series of conditions or constraints that must be continuously and altogether satisfied for the correct operation of the individual machines of the production line, both for their internal operation and in relation to the other cooperating machines, as well as for compliance with the quality and quantity of the final products.

### Step 9: Generation of the ENV file

The result of the initial configuration of the production line and any subsequent updates thereof is made available to the production line optimization system through such ENV file. The ENV file is written in a format suitable for being processed and optimized by means of machine learning techniques.

The bespoke ENV file is defined in an initial study phase of the manufacturing process and is therefore normally invariant over time; however, the content of the ENV file may be subject to changes whenever the conditions or operation of any individual machine are changed. Such changes may be set manually by the user or directly proposed by the automatic control system; in the latter case, any change to the ENV file proposed by the control system must be subject to manual validation before being entered into the ENV file.

### Step 10: Generation of the customer POLICY file

Once all the "energy-consuming" devices and machines within a manufacturing production line have been correctly identified and classified within the ENV file, a second file relative to the "relations in the process line", hereinafter referred to as the POLICY file, can then be defined, wherein the admissible parameter ranges for each machine of the production line are described. If there are interdependent machines, it is necessary to provide a "supervisor agent" that describes all the possible mutual interactions that the individual machines may have within the production line. Also in the POLICY file, admissible ranges are then defined for each interaction of variable parameters between two machines. The control system monitors whether said interactions between machines remain constantly within the predefined admissible ranges.

The result of this analysis is therefore a POLICY file that includes a set of conditions that define all the admissible combinations of the operating parameters of the machines that have mutual interactions. The POLICY file thus makes it possible to identify all the admissible combinations of parameter values, which combinations will also be analysed and monitored by the control system.

Starting from the initial conditions set by the customer at the first drafting of the POLICY file and from subsequent acquisitions from the real process, the control system can automatically implement subsequent changes to the POLICY file. In this way, the control system reacts to changes in the variable parameters of the process and can automatically adapt to such changes, within the limits set by the customer (ranges of variable parameters), with a certain admissible tolerance (represented, according to the "traffic light" logic, by a yellow light).

### Step 11: Classification of the states of variable production parameters

Once all the variable parameters for optimization and the value ranges wherein they can operate under optimal conditions have been defined, it is also necessary to identify the various possible states or operating conditions of the machines and associate them with these variable parameters.

### Step 12: Definition of device or machine alerts

When the control system reads values from the devices or machines of the production line that are outside the admissible ranges predefined by the customer, or when the optimization algorithm generates combinations of values that also are outside the admissible value ranges, the control system issues alert signals on the dashboard, thus warning the operator that the adopted operating function could generate issues. The alert signaling may have different levels and consist, for example, of a progressive colour device, such as a traffic light or speedometer, in which from a green area indicating a proper operation, one enters a yellow risk area, up to a red area, where the predefined tolerances have been exceeded.

If the control system continues to receive values of production parameters outside the predefined admissible ranges, and outside a tolerance risk zone, without being able to bring them back into the regular operating zone through automatic correction interventions, in addition to the on-screen indication on the work dashboard, the system will also send a higher-level alert signal, for example a written communication via e-mail or alert communications on portable mobile devices (e.g., cell phones or tablets) of the operators or supervisors, to draw the attention of all operators assigned to the specific sector of the production line and of the production managers.

### Step 13: Generation of the target function

Once the files illustrating the operating ranges of the machines, their relationships in the production line, and the related alert signals, as well as the classification of the various possible states or operating conditions for each machine of the production line (ENV, POLICY, and ALERT files), have been defined, this set of files is fed to machine learning programs, for example Reinforcement Learning, to generate a target function, that is, a function that defines the relationship between the consumption of basic raw materials and the status of the operating parameters of all the machines of the production line.

### Step 14: Call of the optimization algorithm and result control

For the creation and optimization of the target function, a RL algorithm is used, with or without an environment model, for example the Deep Q-Network algorithm, which works by successive attempts and with a reward and penalty logic in order to identify the combinations of the set of relationships provided as input that allow a lower consumption of basic raw materials. Obviously, in the absence of an environment model, there will be longer convergence times in the first applications of the algorithm.

At the end of the optimization step, the definition, in near real-time, of an ideal scenario is therefore expected, that is, a combination of the functional parameters of the production line which, under the current conditions, minimize the consumption of resources of the production line itself.

We spoke about near real-time above , because in this step it is also verified whether the algorithm converges to a solution in a reasonable time, that is, in a time less than the predefined interval between two successive processing cycles of the values gathered from the production line. This 'reasonable time' is defined in advance as a compromise solution with the cost of computing resources, which obviously is higher the shorter the processing times.

### Third function - Optimization of the target function

### (Fig. 4)

### Step 15: Check about RL algorithm results

When the algorithm converges according but it takes longer than expected, the following scenarios can be assumed:
1. the algorithm is still in the initial training phase (first tests); or a change has just occurred in the environment configuration (change of the ENV, POLICY, or ALERT files); or an automatic update of the POLICY file by the control system has occurred;
2. none of the conditions indicated in point 1) occurred, and therefore the algorithm has a pathological delay. The control system then warns the user, through the dashboard, to increase the processing resources and/or to reduce the frequency of acquisition of the measurements carried out in the production line under control. In any case, according to another feature of the present invention, it is always necessary to obtain a result from the optimization processing before performing a subsequent reading of the conditions of the production line and a new call of the optimization algorithm. If the result is not obtained in a 'reasonable time' or it is desired to improve the optimization convergence, heuristic models are called.

### Step 16: Call of heuristic models

The possible adoption of heuristic models can help the control system to converge more quickly, thanks to the discrete choice , made in advance by the processing system, of some possible combinations of parameters already known for their efficiency.

The call of these models can also be continuous, is easily integrated into the control system and is an alternative element in the definition of the best combinations for the parameters to be optimized. The control system benefits from this in terms of performance and convergence speed.

### Step 17: Control of the accuracy and compliance with the tolerances of the optimization results

Once the optimization result has been obtained, the combination of the optimal parameters thus calculated is compared with the combination of previous parameters and the performance of the control system is measured, in terms of error, accuracy, reduction of the consumed basic raw materials, and compliance with the system boundary conditions (not only those defined by the ENV and POLICY files, but also other constraints, such as the quality of the obtained product or compliance with the quantities and times provided for production contained in the production planning systems themselves).

### Step 18: Measurement of the performance of the optimization system

From the measurement of performance, it is determined whether the system has achieved the result of reducing consumption rates and whether the convergence times have been satisfactory. Otherwise, if the system requires further iterations (especially in the initial phase) or computing resources, to converge in a favourable time.

### Step 19: Adaptation of the system to converge to the optimal result

If the system does not converge in 'reasonable times' either in the training phase or in the operational production phase, a further analysis of the configurations (for example, reward and penalty of the Reinforcement Learning models) of the machine learning models or of the parameters and the related tolerances of the production environment will be required.

### Step 20: Visualization of the optimization results

The results of the optimization, i.e., the set of functional parameters modified by the machine learning process, compared to the previous condition, are displayed in comparison on the control dashboard, evaluated by the operator, and validated, in whole or in part.

Once the results are validated, the control system calculates the obtained reduction of the resources consumption rates and stores the data in a blockchain external to the cloud infrastructure. The punctual consumption rates and the efficiency obtained compared to the efficiency that would have been obtained if the optimization results had not been validated are recorded.

From this pair of consumption rates results, the emissions related to the production demand can be calculated, based on the average emissions of the suppliers of basic raw materials, such as, for example, the emissions generated to produce one kWh of electricity at a given hour of the day in which a certain mix of generation systems is involved (e.g., photovoltaic solar, nuclear, wind, combined cycles, etc.), or based on direct emissions, for example from a furnace operating on methane gas to produce heat in a production process. In this way, the carbon footprint of the production line and of the individual machines involved can be recorded. It is also possible to determine the carbon footprint per unit of production (e.g., tons of CO2 equivalent per ton of steel or paper produced).

### Fourth function - Control of results and performance

### (Fig. 5)

### Step 21: Comparison of new parameters with the old ones

A visualization step makes it possible to highlight the differences between the previous acquisition and the current result (difference between old and optimized parameters, all which parameters must have been previously stored in an appropriate file storage systems), as well as to produce double-line graphs that illustrate the benefit in terms of system efficiency in the use of resources, showing both the data without optimization and the improved result.

### Step 22: Identification of the modified parameters

This step is important for continuously making corrections to the operating parameters in the production line. The system selects only those functional parameters that have been modified compared to the last optimization cycle of the system and prepares instructions in SCADA or OPC-UA to be executed and conveyed to the MES, through the MQTT client and the gateway software, to make the changes effective and thus achieve energy savings and constant operational improvement.

### Step 23: Storage of new parameters

When the optimization system identifies the parameters to be modified, it stores the new ones in a storage file system to ensure the historical continuity of the information in the system's databases and the traceability of all the changes.

### Step 24: Whole cycle time measurement

This step identifies the internal performance of the system to assess the level of saturation of the resources in the cloud, the possible dynamic activation of capacity (storage space, RAM (Random Access Memory), or GPU (Graphic Processor Unit)) for the next operations, so that the results of the optimization processing are completed before a new reading of the operating conditions of the process line is started.

### Step 25: Control of resources

At each iteration, the processing resources used are analysed and compared with those available, presenting the results of this analysis on the system management dashboard, for the purpose of a self-assessment of the suitability of the resources.

This analysis is essential when new machines to be optimized or new customers are introduced, to assess the new resources of the system.

From the foregoing description, it is clear how the control system of the present invention has fully achieved all the intended objects. It is understood, however, that the invention should not be considered limited to the arrangements illustrated above, which are only exemplary embodiments thereof, but that various modifications are possible, all within the reach of a person skilled in the art, without thereby departing from the scope of protection of the invention itself, which is solely defined by the following claims.

## Claims

1. Control system for optimizing the consumption rates of basic raw materials in a production line of the manufacturing industry comprising a plurality of machines, **characterized in that** it comprises:
a. selecting machines of said production line that have significant consumption of basic raw materials;
b. equipping the machines selected in step a) with smart digital meters (SM) measuring and storing basic raw material consumption rates of said machines;
c. defining variable operating parameters of the machines selected in step a) and their admissible variation ranges and collecting this data in a "work environment" (ENV) file;
d. selecting which of the machines selected in step a) have mutual interactions that make their operation interdependent;
e. defining admissible combinations of operating parameters of the machines selected in step d) and collecting this data in a "relationship in the production line" (POLICY) file;
f. defining alert conditions of different level in relation to each of the limits defined in steps c) and e), i.e. ENV and POLICY files, and collect this data in an "alert conditions" (ALERT) file;
g. feeding the data defined in steps c), e), f), as ENV, POLICY and ALERT files, to a machine learning algorithm and generating a target function, wherein a relationship between the consumption rates of said basic raw materials and the status of operating parameters of all the machines of said production line selected in step a) is defined;
h. automatically optimize said target function using a RL algorithm, with or without an environment model, identifying the combinations of a set of operating parameters contained in the target function that allow to minimize the consumption rates of said basic raw materials;
i. compare the operating parameters defined in step h) with the original operating parameters and identify the group of modified operating parameters;
j. send instructions to those machines which are affected by the modified operating parameters to make said modified operating parameters operational in the production line.

2. Control system as in claim 1, wherein when the target function converges in a time longer than a reasonable time set a priori and the control system is not in an initial training step and no changes have occurred in the environment configuration, i.e. no variation of the ENV, POLICY or ALERT files, the control system warns the user to increase the processing resources and/or to reduce the frequency of acquisition of the measurements carried out in the production line under control.

3. Control system as in claim 2), wherein heuristic models are adopted to increase the convergence speed of the target function, inserting into said optimization step h) one or more combinations of parameters already known for their efficiency.

4. Control system as in claim 1), wherein downstream of step h), a combination of optimal calculated parameters is compared with a combination of previous parameters and the performance of the control system is measured, in terms of error, accuracy, reduction of consumption rates of basic raw materials and compliance with system boundary conditions.

5. Control system as in claim 4), wherein at each iteration of the control system used processing resources are analysed and compared with available resources, showing the results of this analysis on a system management dashboard, for the purpose of a self-assessment about suitability of the processing resources.
